# EUROPEAN PATENT APPLICATION

(11) **EP 4 339 624 A1**
(43) Date of publication of application: **20.03.2024**
(21) Application number: 22195992.7
(22) Date of filing: 15.09.2022
(51) Int. Cl.: G01Q 30/04, G06T 7/62, G06V 20/69, G06V 10/82

(54) **IMAGE DATA SEGMENTATION**

(71) Applicant: Infinitesima Limited, Abingdon, Oxfordshire OX14 1RG (GB)
(72) Inventor: The designation of the inventor has not yet been filed
(74) Representative: Ribeiro, James Michael

(57) **Abstract**

A method of measuring a sample, the sample comprising a first region and a feature, the method comprising: scanning the sample to obtain a series of height image data, the height image data comprising first region data corresponding to the first region, and feature data corresponding to the feature; using a trained neural network to segment the height image data so as to identify the feature data; using the identified feature data to determine at least two measurement points in the height image data; and using the measurement points to determine a dimension of the feature.

## Description

### FIELD OF THE INVENTION

The present invention relates to a method and apparatus of determining a dimension of a feature by segmenting height image data obtained using a scanning probe microscope.

### BACKGROUND OF THE INVENTION

When measuring samples using a scanning probe microscope, it is often important to accurately measure features of these samples, such as the height of a protrusion or the depth of a depression. To measure height for example, it is necessary to measure a point of the feature relative to a "ground" point on the sample. To do this efficiently, accurately and on an automated basis, it is important to reliably identify the feature, as well as suitable "ground" points in the image (i.e. those positions not relating to a feature or abnormality).

### SUMMARY OF THE INVENTION

A first aspect of the invention provides a method of measuring a sample, the sample comprising a first region and a feature, the method comprising: scanning the sample to obtain a series of height image data, the height image data comprising first region data corresponding to the first region, and feature data corresponding to the feature; using a trained neural network to segment the height image data so as to identify the feature data; using the identified feature data to determine at least two measurement points in the height image data; and using the measurement points to determine a dimension of the feature.

The first measurement point of the measurement points may be associated with the feature. The first measurement point may be associated with a centre of the feature. The first measurement point may be associated with a pixel of the feature data having the highest or lowest height value.

The second measurement point of the measurement points may be associated with the first region. The second measurement point may be associated with a position of the first region that is equidistant or substantially equidistant between the centres of two adjacent features. The second measurement point may be associated with a position of the first region that is equidistant or substantially equidistant between the edges of two adjacent features, optionally each of the edges or edge pixels that are closest to the adjacent feature.

The dimension may be one of feature height, depth or width.

The feature may be one of a dome, dish, well, pad, column, tower, protrusion or trench.

The method may further comprise using the identified feature data to generate a mask, the mask being configured to mask the feature data and to unmask the first region data.

The first region may be substantially flat, and the method may further comprise: determining a transformation based on the unmasked first region data and the first region, the transformation arranged to flatten the first region data; and applying the transformation to the height image data to obtain corrected height image data, wherein the dimension of the feature is determined using the corrected height image data and the measurement points.

The dimensions of a plurality of features may be obtained, and an average of the dimensions may be calculated.

A second aspect of the invention provides apparatus for measuring a sample, the sample comprising a first region and a feature, the apparatus comprising: a scanning probe microscope configured to scan the sample to obtain a series of height image data, the height image data comprising first region data corresponding to the first region, and feature data corresponding to the feature; a trained neural network configured to segment the height image data so as to identify the feature data; a determination unit configured to determine at least two measurement points in the height image data using the identified feature data; and a calculation unit configured to determine a dimension of the feature using the measurement points.

The trained neural network is further configured to generate a mask using the identified features data, the mask being configured to mask the feature data and to unmask the first region data.

The first region may be substantially flat, and the apparatus may further comprise: a transformation determining unit configured to determine a transformation based on the unmasked first region data and the first region, the transformation arranged to flatten the first region data; and a transforming unit configured to apply the transformation to the height image data to obtain corrected height image data, wherein the calculation unit is configured to determine the dimension of the feature using the corrected height image data and the measurement points.

### BRIEF DESCRIPTION OF THE DRAWINGS

Embodiments of the invention will now be described with reference to the accompanying drawings, in which:
Figure 1 shows a scanning probe microscopy system according to an embodiment of the invention;
Figure 2 shows a measurement system in accordance with an embodiment of the invention;
Figures 3A-C show sample segmentation and mask generation according to embodiments of the invention;
Figures 4A-C show sample segmentation and mask generation according to embodiments of the invention;
Figure 5 shows a method of training a neural network;
Figures 6A-C show a comparison of classical segmentation results versus segmentation according to embodiments of the invention;
Figure 7 shows a method of measuring a sample according to an embodiment of the invention; and
Figure 8 shows a method of measuring a sample according to an embodiment of the invention.

### DETAILED DESCRIPTION OF EMBODIMENT(S)

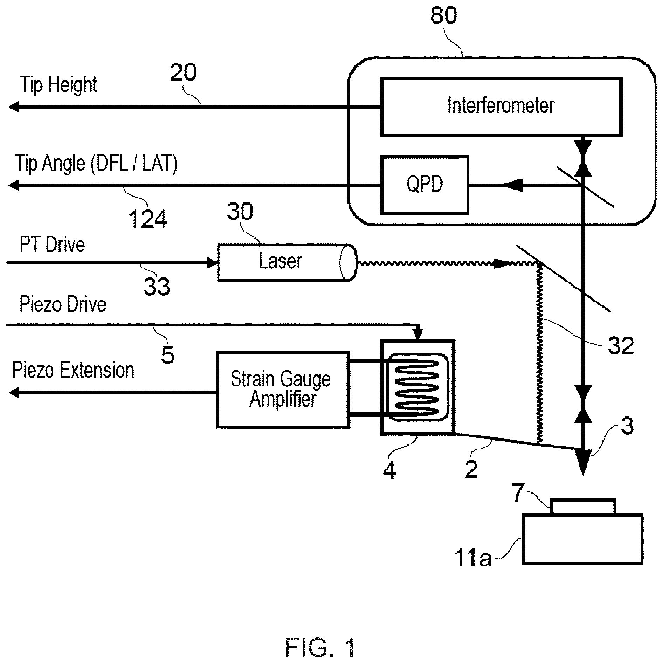

A scanning probe microscopy system according to an embodiment of the invention is shown in Figure 1. The system comprises a piezoelectric driver 4 and a probe comprising a cantilever 2 and a probe tip 3. The bottom of the piezoelectric driver 4 provides a cantilever mount, with the cantilever 2 extending from the cantilever mount from a proximal end or base to a distal free end. The probe tip 3 is carried by the free end of the cantilever 2.

The probe tip 3 comprises a conical or pyramidal structure that tapers from its base to a point at its distal end that is its closest point of interaction with a sample 7 on a sample stage 11a. The sample comprises a sample surface which defines a sample surface axis which is normal to the sample surface and in Figure 1 also extends vertically. The cantilever 2 comprises a single beam with a rectangular profile extending from the cantilever mount 13. The cantilever 2 has a length of about 20 micron, a width of about 10 micron, and a thickness of about 200nm.

In this example the probe tip 3 tapers to a point, but in other embodiments the probe tip 3 may be specially adapted for measuring sidewalls. For instance the probe tip 3 may have a flared shape.

The cantilever 2 is a thermal bimorph structure composed of two (or more) materials, with differing thermal expansion coefficients - typically a silicon or silicon nitride base with a gold or aluminium coating. The coating extends the length of the cantilever and covers the reverse side from the tip 3. An illumination system (in the form of a laser 30) under the control of photothermal (PT) drive 33 is arranged to illuminate the cantilever on its upper coated side with an intensity-modulated radiation spot.

The cantilever 2 is formed from a monolithic structure with uniform thickness. For example the monolithic structure may be formed by selectively etching a thin film of SiO₂ or SiN₄ as described in Albrecht T., Akamine, S., Carver, T.E., Quate, C.F. J., Microfabrication of cantilever styli for the atomic force microscope, Vac. Sci. Technol. A 1990, 8, 3386 (hereinafter referred to as "Albrecht et al."). The tip 3 may be formed integrally with the cantilever, as described in Albrecht et al., it may be formed by an additive process such as electron beam deposition, or it may be formed separately and attached by adhesive or some other attachment method.

The wavelength of the actuation beam 32 output by the laser 30 is selected for good absorption by the coating, so that the cantilever 2 bends along its length and moves the probe tip 3. In this example the coating is on the reverse side from the sample so the cantilever 2 bends down towards the sample when heated, but alternatively the coating may be on the same side as the sample so the cantilever 2 bends away from the sample when heated.

The piezoelectric driver 4 expands and contracts up and down in the Z-direction in accordance with a piezo drive signal 5 at a piezo driver input. As described further below, the piezo drive signal 5 causes the piezoelectric driver 4 to move the probe repeatedly towards and away from the sample 7 in a series of cycles. The piezo drive signal 5 is generated by a piezo controller (not shown). Typically the piezoelectric driver 4 is mechanically guided by flexures (not shown).

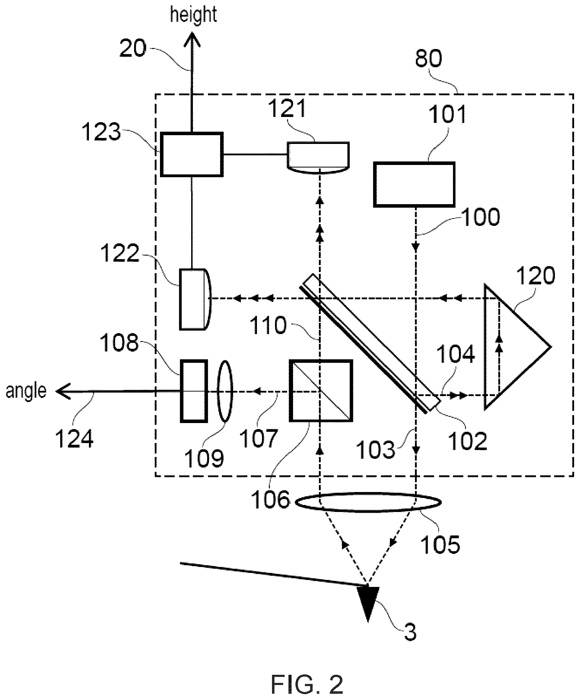

A measurement system 80 is arranged to detect a height of the free end of the cantilever 2 directly opposite to the probe tip 3. The measurement system 80 includes an interferometer and a quadrant photodiode (QPD). Figure 1 only shows the measurement system 80 schematically and Figure 2 gives a more detailed view. Light 100 from a laser 101 is split by a beam splitter 102 into a sensing beam 103 and a reference beam 104. The reference beam 104 is directed onto a suitably positioned retro-reflector 120 and thereafter back to the beam splitter 102. The retro-reflector 120 is aligned such that it provides a fixed optical path length relative to the vertical (Z) position of the sample 7. The beam splitter 102 has an energy absorbing coating and splits both the incident 103 and reference 104 beams to produce first and second interferograms with a relative phase shift of 90 degrees. The two interferograms are detected respectively at first 121 and second 122 photodetectors.

Ideally, the outputs from the photodetectors 121, 122 are complementary sine and cosine signals with a phase difference of 90 degrees. Further, they should have no dc offset, have equal amplitudes and only depend on the position of the cantilever and wavelength of the laser 101. Known methods are used to monitor the outputs of the photodetectors 121, 122 while changing the optical path difference in order to determine and to apply corrections for errors arising as a result of the two photodetector outputs not being perfectly harmonic, with equal amplitude and in phase quadrature. Similarly, dc offset levels are also corrected in accordance with methods known in the art.

These photodetector outputs are suitable for use with a conventional interferometer reversible fringe counting apparatus and fringe subdividing apparatus 123, which may be provided as dedicated hardware, FPGA, DSP or as a programmed computer. Phase quadrature fringe counting apparatus is capable of measuring displacements in the position of the cantilever to an accuracy of λ/8. That is, to 66 nm for 532 nm light.

Known fringe subdividing techniques, based on the arc tangent of the signals, permit an improvement in accuracy to the nanometre scale or less. In the embodiment described above, the reference beam 104 is arranged to have a fixed optical path length relative to the Z position of the sample 7. It could accordingly be reflected from the surface of the stage 11a on which the sample 7 is mounted or from a retro-reflector whose position is linked to that of the stage. The reference path length may be greater than or smaller than the length of the path followed by the beam 103 reflected from the probe. Alternatively, the relationship between reflector and sample Z position does not have to be fixed. In such an embodiment the reference beam may be reflected from a fixed point, the fixed point having a known (but varying) relationship with the Z position of the sample. The height of the tip is therefore deduced from the interferometrically measured path difference and the Z position of the sample with respect to the fixed point.

The interferometer detector is one example of a homodyne system. The particular system described offers a number of advantages to this application. The use of two phase quadrature interferograms enables the measurement of cantilever displacement over multiple fringes, and hence over a large displacement range. Examples of an interferometer based on these principles are described in US6678056 and WO2010/067129. Alternative interferometer systems capable of measuring a change in optical path length may also be employed. A suitable homodyne polarisation interferometer is described in EP 1 892 727 and a suitable heterodyne interferometer is described in US 5 144 150.

Returning to Figure 1, the output of the interferometer is a height signal on a height detection line 20 which is input to a surface height calculator (not shown) and a surface detection unit (not shown). The surface detection unit is arranged to generate a surface signal on a surface detector output line for each cycle when it detects an interaction of the probe tip 3 with the sample 7.

The reflected beam is also split by a beam splitter 106 into first and second components 107, 110. The first component 107 is directed to a segmented quadrant photodiode 108 via a lens 109, and the second component 110 is split by the beam splitter 102 and directed to the photodiodes 121, 122 for generation of the height signal on the output line 20. The photodiode 108 generates angle data 124 which is indicative of the position of the first component 107 of the reflected beam on the photodiode 108, and varies in accordance with the angle of inclination of the cantilever relative to the sensing beam 103.

The angle data 124 comprises a deflection/bending signal which indicates a flexural angle of the cantilever - i.e. an angle which changes as the cantilever bends along its length. Thus the deflection/bending signal is indicative of the flexural shape of the cantilever. The deflection/bending signal may be determined in accordance with a difference between the signals from the top and bottom halves of the quadrant photodiode 108.

The angle data 124 also comprises a lateral/twisting signal which indicates a torsion angle of the cantilever - i.e. an angle which changes as the cantilever twists. Thus the lateral/twisting signal is indicative of the torsional shape of the cantilever. The lateral/twisting signal may be determined in accordance with a difference between the signals from the left and right halves of the quadrant photodiode 108.

The scanning probe microscopy system described above is used to scan a sample to obtain a series of height image data. The sample comprises a first region and one or more features. A feature in the sample is simply an abnormality of the sample, optionally having a height dimension that notably deviates from a mean or mode height dimension across the sample. The features may be columns or wells, for example. Features correspond to feature data within height image data.

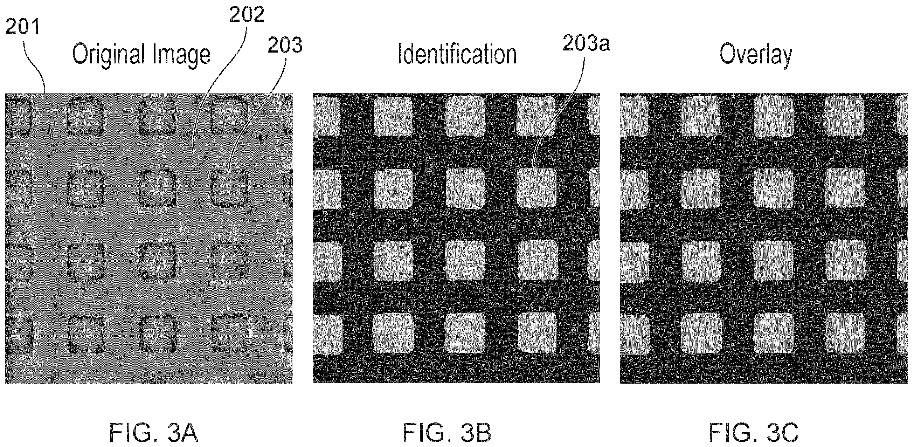

Turning to Figure 3A, an image 201 formed from the height image data is shown. The height image data comprises first region data 202 corresponding to a first region of the sample. The height image data also comprises feature data 203 corresponding to the one or more features of the sample. The features are columns that protrude from the sample surface, having a substantially square base when viewed from above.

A trained neural network segments the height image data so as to identify the feature data. In other words, the trained neural network receives the height image data as an input, and determines the portions of the image that correspond to the feature data 203 and the portions of the image that do not correspond to the feature data 203. These determinations mean that the neural network can identify the feature data 203.

Figure 3B shows the result of the segmentation by the trained neural network. The neural network has identified the portions of the image that correspond to feature data 203. The portions corresponding to identified feature data 203a are shown in Figure 3B.

The neural network can output a mask, using the identified feature data 203a. As shown in Figure 3C, this can be overlayed over the height image data, such that the feature data 203 is masked and the first region data 202 remains unmasked. Following this, one or more processing steps can take place. For example, if the first region data 202 is known to be substantially flat, the image 201 can be masked as discussed above. A transformation can be determined based on the unmasked first region data and the knowledge of the flatness of the first region. This may be necessary if the first region data is not substantially flat due to an error in the scanning process or the scanning equipment for example. The transformation can then be applied to the whole dataset in order to obtain corrected height image data.

The transformation may be a first order transformation, for example, in which an angled plane is transformed to a horizontal plane. Alternatively, the transformation may be a second order transformation or higher order transformation, in which a curved surface is transformed to a horizontal plane.

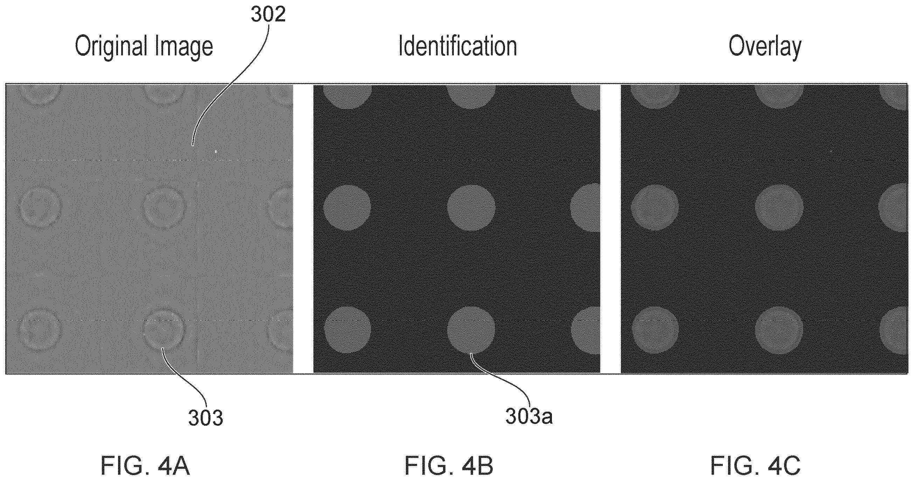

Figure 4A shows an image resulting from a series of height image data obtained with a scanning probe microscope. As with the data shown in Figure 3A, the height image data of Figure 4A comprises first region data 302 and feature data 303 corresponding to a plurality of features. However, in this Figure the features in question are domes that protrude from the sample surface, rather than columns. The domes have a substantially circular base when viewed from above.

As with the previous embodiment, the trained neural network segments the height image data so as to identify the feature data. The result of this identification 303a is shown in Figure 4B. An optional masking process is shown in Figure 4C, as is discussed above with respect to Figure 3C.

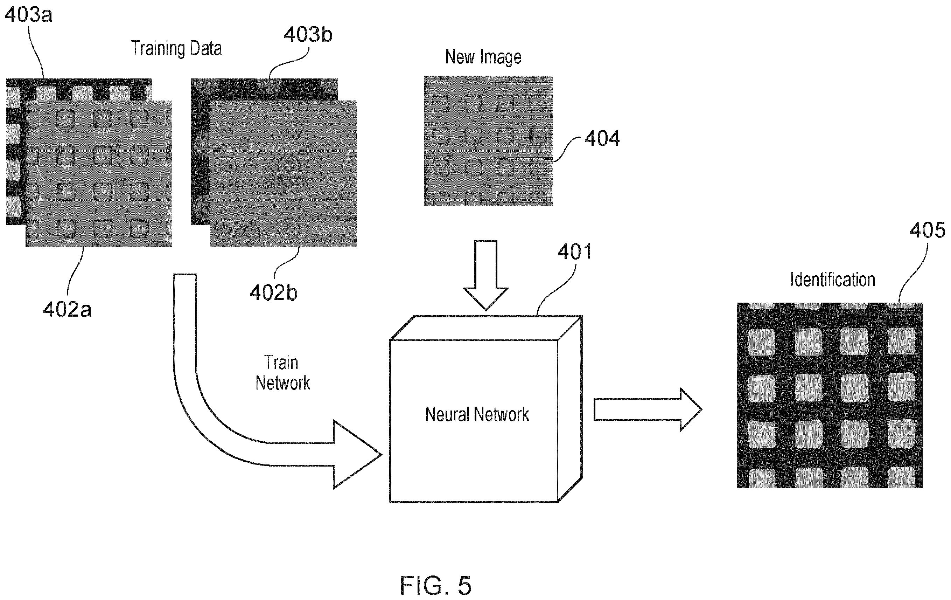

Turning now to Figure 5, a manner of training the neural network 401 is shown. The neural network 401 receives images 402a, 402b as training inputs along with corresponding identifications 403a, 403b of any features within the images. These training inputs are used to train the neural network to identify feature data within height image data. As can be seen, both column features and dome features are provided as training inputs. Equally, further types of features/structures may be provided to the neural network as training inputs.

Following the training of the neural network, a new image 404 is provided to the neural network. The neural network segments this image to identify any feature data in the manner described above. This identification may be used to generate and output a mask 405.

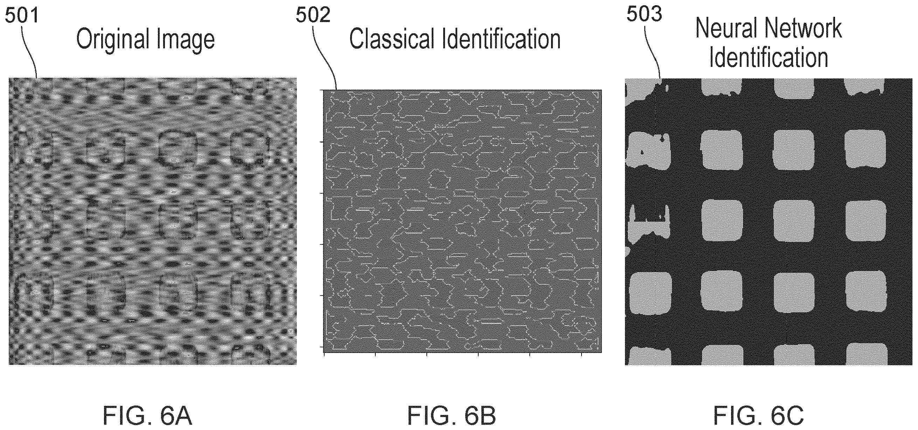

Figure 6 shows the effectiveness of the segmentation technique when it is carried out by a trained neural network compared with when it is carried out using a more classical approach. The original image 501 shown in Figure 6A displays a number of features, specifically columns, as with the image shown in Figure 3A. However, in this example the image is somewhat obscured by noise. As such, the columns are more difficult to discern in this image than in the image shown in Figure 3A.

Figure 6B shows the result 502 of a classical method of segmenting the image. Such a classical method may involve identifying features by identifying portions of the height image data that exceed a given height threshold. Such a method may be somewhat effective for height image data that does not have substantial levels of noise. However, given the high level of noise associated with the image of Figure 6A, the result of the classical identification method is not reflective of the actual image, as can be seen in Figure 6B.

In contrast, the segmentation 503 performed by the trained neural network using the method described above is shown in Figure 6C. As can be seen this identification is a lot more accurate than the classical result, i.e. the identification performed by the neural network correctly identifies more features than the more classical method.

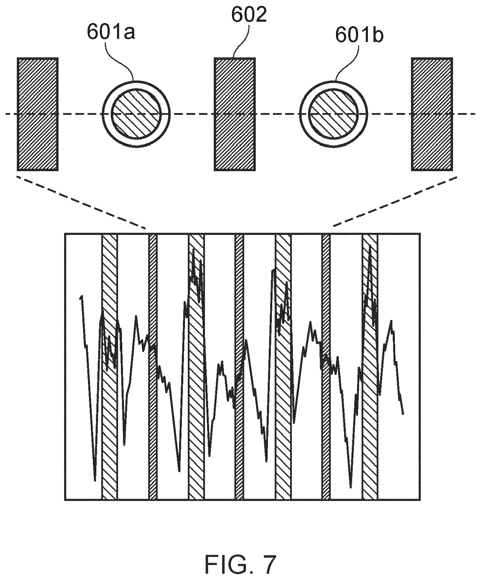

Turning now to Figure 7, a portion of an image is shown. The portion of the image contains two dome features 601a, 601b. Once the feature data has been identified by the trained neural network 401 in the manner described above, the identified feature data is used to determine at least two measurement points in the height image data. Specifically, a first measurement point is associated with a feature. For example, the first measurement point is associated with the left-hand dome feature 601a. This may mean that the first measurement point is the central point of the left-hand dome feature 601a, or an edge point of the left-hand dome 601a, or another pixel within the feature data corresponding to the left-hand dome 601a. A second measurement point is associated with the first region. Specifically, the second measurement point may be associated with a position 602 of the first region that is substantially equidistant between two adjacent features, i.e. a midpoint between two adjacent features.

Once these two measurement points have been determined, the measurement points are used to determine a dimension of the feature. This dimension may be the height of the feature for example. The height can be obtained by subtracting the relative heights of the data at the two measurement points. By selecting a midpoint between two adjacent features as the second measurement point, it is ensured that this measurement point reflects the "ground level" of the sample, i.e. a point in the sample that is not associated with any notable features, protrusions or depressions, and effectively represents an average, unremarkable point of the sample.

The graph in Figure 7 shows the corresponding height measurements at each data point. For example it can be seen that the height measurements peak at the locations of the columns that have been identified by the neural network.

Instead of using just two measurement points to determine the dimension of the feature, more measurement points may used - for instance multiple measurement points may be averaged. For example, a plurality of measurement points associated with a feature or a plurality of features may be determined, and a mean may be taken of them. Additionally, a plurality of measurement points associated with a plurality of first region points may be determined, and a mean may be taken of them also. The two means may be subtracted to obtain a dimension relating to the feature or features. In a similar vein, it is possible that the dimensions of a number of features are determined, and the mean of these dimensions is calculated to determine a mean feature dimension value.

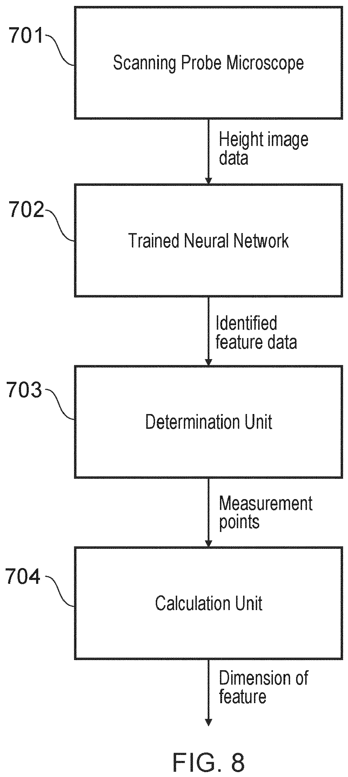

Figure 8 shows a flow chart illustrating the aforementioned process, and the apparatus performing it. A scanning probe microscope 701 scans a sample and obtains height image data. This height image data is received as an input by a trained neural network 702. The trained neural network 702 identifies any feature data within the height image dataset. The identified feature data is received by a determination unit 703, which uses the identified feature data to determine two measurement points in the height image data. The measurement points are used by a calculation unit 704 to calculate a dimension of a feature of the sample.

Although the invention has been described above with reference to one or more preferred embodiments, it will be appreciated that various changes or modifications may be made without departing from the scope of the invention as defined in the appended claims.

## Claims

1. A method of measuring a sample, the sample comprising a first region and a feature, the method comprising:
scanning the sample to obtain a series of height image data, the height image data comprising first region data corresponding to the first region, and feature data corresponding to the feature;
using a trained neural network to segment the height image data so as to identify the feature data;
using the identified feature data to determine at least two measurement points in the height image data; and
using the measurement points to determine a dimension of the feature.

2. The method of claim 1, wherein a first measurement point of the measurement points is associated with the feature.

3. The method of claim 2, wherein the first measurement point is associated with a centre of the feature.

4. The method of claim 2 or 3, wherein a second measurement point of the measurement points is associated with the first region.

5. The method of claim 4, wherein the second measurement point is associated with a position of the first region that is equidistant between the centres of two adjacent features.

6. The method of any preceding claim, wherein the dimension is one of feature height, depth or width.

7. The method of any preceding claim, wherein the feature is one of a dome, dish, well, pad, column, tower, protrusion or trench.

8. The method of any preceding claim, further comprising using the identified feature data to generate a mask, the mask being configured to mask the feature data and to unmask the first region data.

9. The method of claim 8, wherein the first region is substantially flat, and wherein the method further comprises:
determining a transformation based on the unmasked first region data and the first region, the transformation arranged to flatten the first region data; and
applying the transformation to the height image data to obtain corrected height image data,
wherein the dimension of the feature is determined using the corrected height image data and the measurement points.

10. The method of any preceding claim, wherein the dimensions of a plurality of features are obtained, and an average of the dimensions is calculated.

11. The method of any preceding claim, wherein scanning the sample comprises scanning the sample with a probe microscope.

12. Apparatus for measuring a sample, the sample comprising a first region and a feature, the apparatus comprising:
a scanning probe microscope configured to scan the sample to obtain a series of height image data, the height image data comprising first region data corresponding to the first region, and feature data corresponding to the feature;
a trained neural network configured to segment the height image data so as to identify the feature data;
a determination unit configured to determine at least two measurement points in the height image data using the identified feature data; and
a calculation unit configured to determine a dimension of the feature using the measurement points.

13. The apparatus of claim 12, wherein the trained neural network is further configured to generate a mask using the identified feature data, the mask being configured to mask the feature data and to unmask the first region data.

14. The apparatus of claim 13, wherein the first region is substantially flat, and the apparatus further comprises:
a transformation determining unit configured to determine a transformation based on the unmasked first region data and the first region, the transformation arranged to flatten the first region data; and
a transforming unit configured to apply the transformation to the height image data to obtain corrected height image data,
wherein the calculation unit is configured to determine the dimension of the feature using the corrected height image data and the measurement points.
